Europäisches Patentamt

European Patent Office

Office européen des brevets

(11) Veröffentlichungsnummer: **0 194 402**
**A2**

(12) # EUROPÄISCHE PATENTANMELDUNG

(21) Anmeldenummer: 85890265.3

(22) Anmeldetag: 23.10.85

(51) Int. Cl.⁴: **H 02 K 15/02**

(30) Priorität: 11.03.85 AU 9632/85
11.03.85 AU 9633/85
26.03.85 AU 9901/85

(43) Veröffentlichungstag der Anmeldung:
17.09.86 Patentblatt 86/38

(84) Benannte Vertragsstaaten:
AT BE CH DE FR GB IT LI LU NL SE

(71) Anmelder: **Swiatek, Zdzislaw**
**Langackergasse 19/11**
**A-1190 Wien(AT)**

(72) Erfinder: **Stanley, Louis**
**26 Pamela Ave**
**Peakhurst, N.S.W. 2210(AU)**

(74) Vertreter: **Gibler, Ferdinand, Dipl.Ing.Dr.tech.**
**Dorotheergasse 7/14**
**A-1010 Wien(AT)**

(54) **Elektrische Maschine mit einem Wicklungen tragenden Kern sowie Vorrichtungen zur Herstellung solcher Kerne.**

(57) Zur Herstellung von Kernen für elektrische Maschinen, wie Rotoren, Statoren, Umformer u.dgl., werden in einem Band (1) fortlaufend Ausnehmungen (2) gestanzt und aus diesem Band (1) wird ein Kranz mit einseitig offenen Ausnehmungen (2) gewickelt.
Dieser Kranz mit diesen Ausnehmungen (2) ist zunächst frontal offen und wird nach dem Einbringen von Feldwicklungen durch Einwärtspressen der zwischen den Ausnehmungen (2) gebildeten Stege (2') um einen Winkel (α) wählbarer Größe geschlossen, wobei die gewählte Größe dieses Winkels (α) die Breite der sich beim Schließen des Kranzes zwischen den Stegen bildenden Spalte (3) bestimmt. Insbesondere für die Verwendung in Umformern kann der Kern auch aus einem breiteren und einem schmäleren Band (1a und 1b) gewickelt sein, die satt aneinanderliegen, wobei Feldwicklungen in den vom breiteren Band (1a) umschlossenen, vom schmäleren Band (1b) freibelassenen Bereichen des Wickels untergebracht sind.

Fig. 1

- 1 -          0194402

Die Erfindung betrifft elektrische Maschinen mit einem Wicklungen tragenden, einem Rotor, Stator, Umformer od.dgl. zugehörigen Kern.

Aufgabe der Erfindung ist die Einsparung von Material und Arbeitsaufwand bei der Herstellung solcher Kerne sowie die Erhöhung des Wirkungsgrades von elektrischen Maschinen, sowohl rotierenden, wie Motoren und Generatoren, als auch ruhenden, wie Transformatoren (Umformern).

Bei der Herstellung von Elektromotoren, insbesondere der weitverbreiteten Induktionsmotoren, wird der Rotor (Anker, Läufer) beispielsweise von einer Vielzahl gestapelter Metallscheiben gebildet, die in den meisten Fällen durch eine Gußmasse zusammengehalten sind. Beispielsweise wird der Kern eines solchen Rotors aus einer Anzahl gestapelter Scheiben gebildet, die durch ein Gußgehäuse zusammengehalten sind, das sich durch den Scheibenstapel erstreckende Arme aufweist.

Die Herstellung solcher Kerne trägt infolge der Metall= vergeudung und der komplizierten Art des Zusammenbaues wesentlich zu den Kosten des Produktes bei. Eine dement= sprechende Metallvergeudung ergibt sich auch bei der Her= stellung von Statoren (Ständerwicklungen).

Wenn bei der Herstellung von Axialfluß-Motoren ein Band zur Anfertigung des Kernes gestanzt und aufgewickelt wird, ist es besonders wichtig, die ausgestanzten radialen Ausnehmungen auszurichten, so daß am fertigen Wickel die Ausnehmungen jeweils gemeinsam Schlitze oder Durchlässe begrenzen.

Weil die Schlitze zur Aufnahme der Feldwicklungen lediglich eine Breite von 2 mm aufweisen, ist es unmöglich, eine einfache Drahtwickelmaschine zu verwenden, so daß für die Herstellung der Wicklungen ein hoher Zeitaufwand erforderlich ist.

Ziel der Erfindung ist es, die obgenannten Nachteile zu beseitigen oder zumindest wesentlich zu verringern.

Erfindungsgemäß weist der Kern einer elektrischen Maschine der eingangs bezeichneten Gattungen einen periphere Aus= nehmungen bildenden, die Wicklungen aufnehmenden und um= schließenden Kranz auf.

Ein wesentlicher Vorteil dieser Lösung besteht im Vergleich zu bisherigen Kern-Konstruktionen im sehr geringen Metallverbrauch.

Die Erfindung ist gleichermaßen auf Kerne anwendbar, die aus einem Plattenstapel bestehen, als auch auf Kerne, die aus einem Blechband-Wickel gebildet sind.

Bevorzugte Ausführungsformen des Erfindungsgegenstandes sowie weitere Erfindungsmerkmale werden nachstehend an Hand von Ausführungsbeispielen unter Bezugnahme auf die Zeichnungen beschrieben. Im einzelnen zeigen Fig. 1 und 2 die Seiten= ansicht bzw. die Draufsicht eines erfindungsgemäßen Stator-Kernes, Fig. 3 und 4 zeigen in gleicher Darstellungsweise einen Rotor-Kern. Fig. 5 und 6 stellen einen Stator-Kern mit darin eingebauten Wicklungen dar und Fig.7 ist eine schema= tische Seitenansicht einer Vorrichtung zur Bearbeitung solcher Kerne.

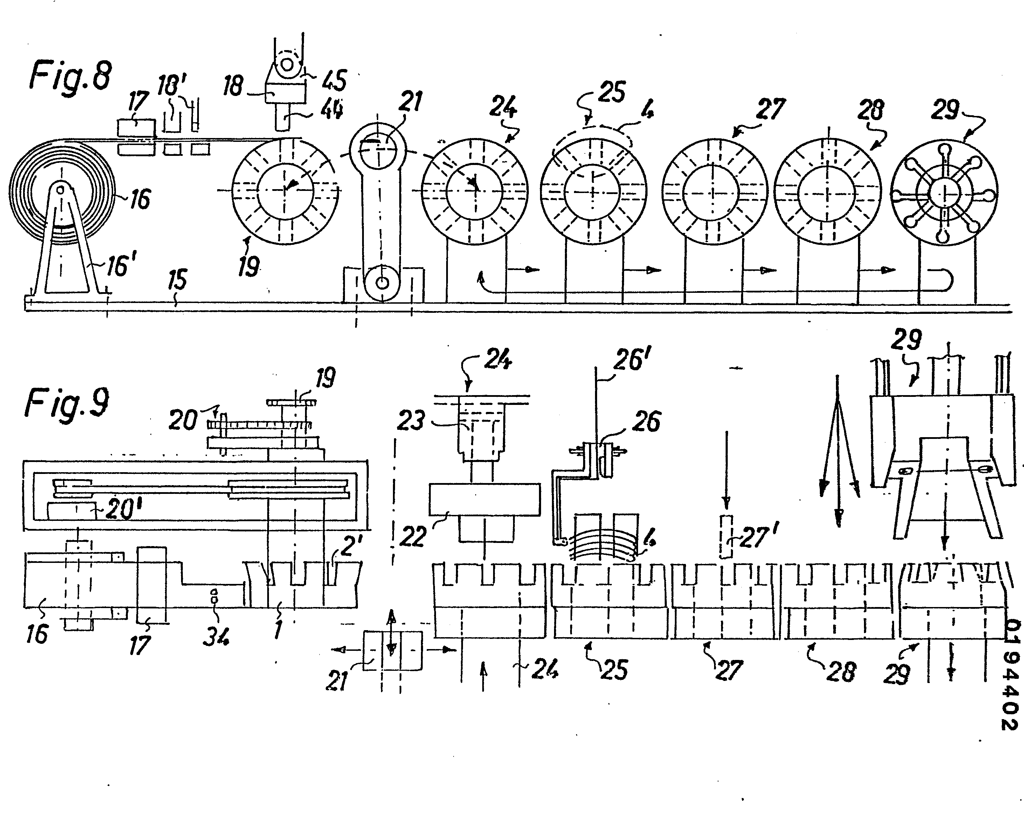

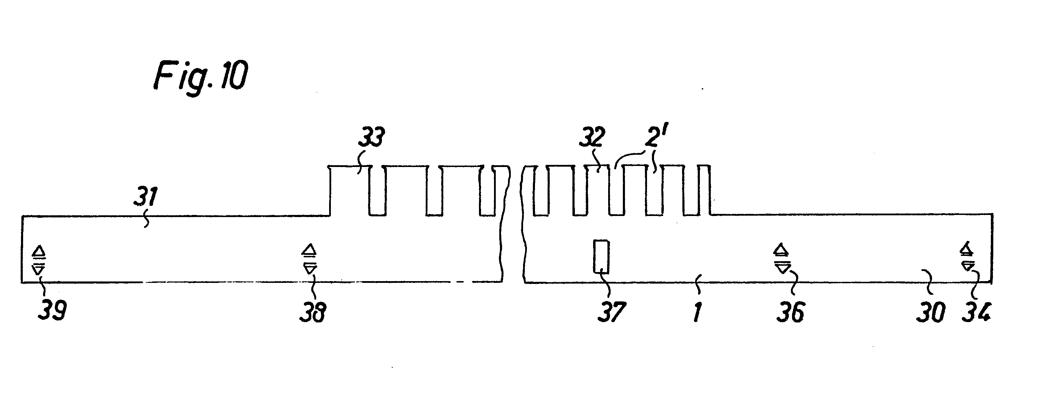

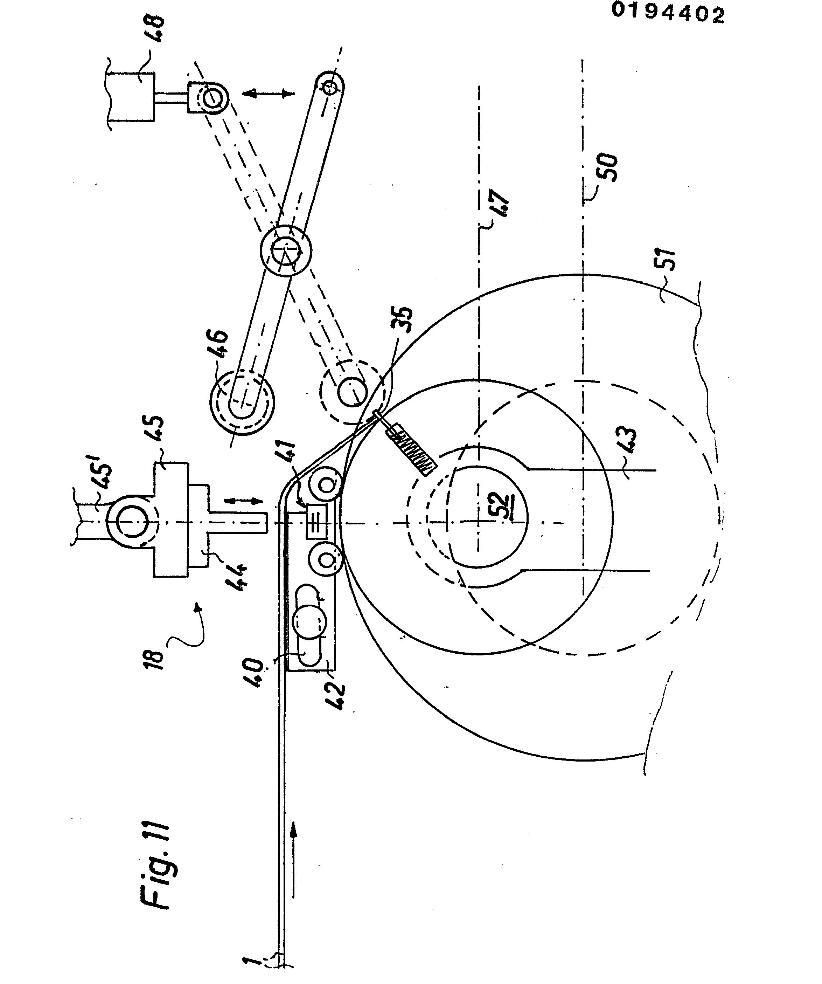

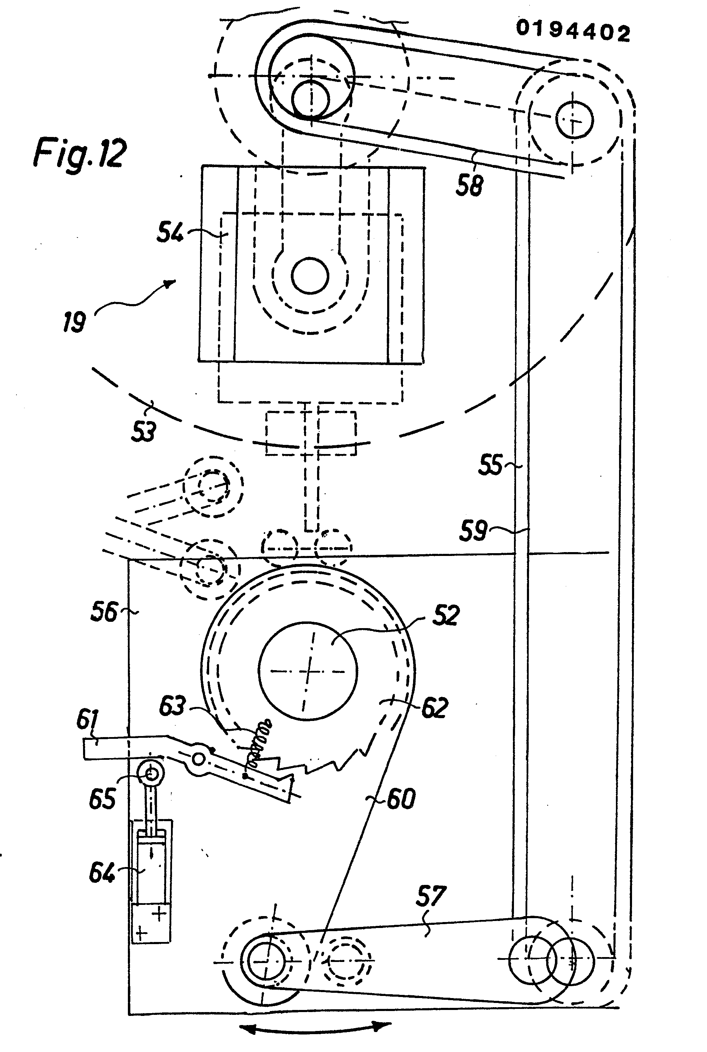

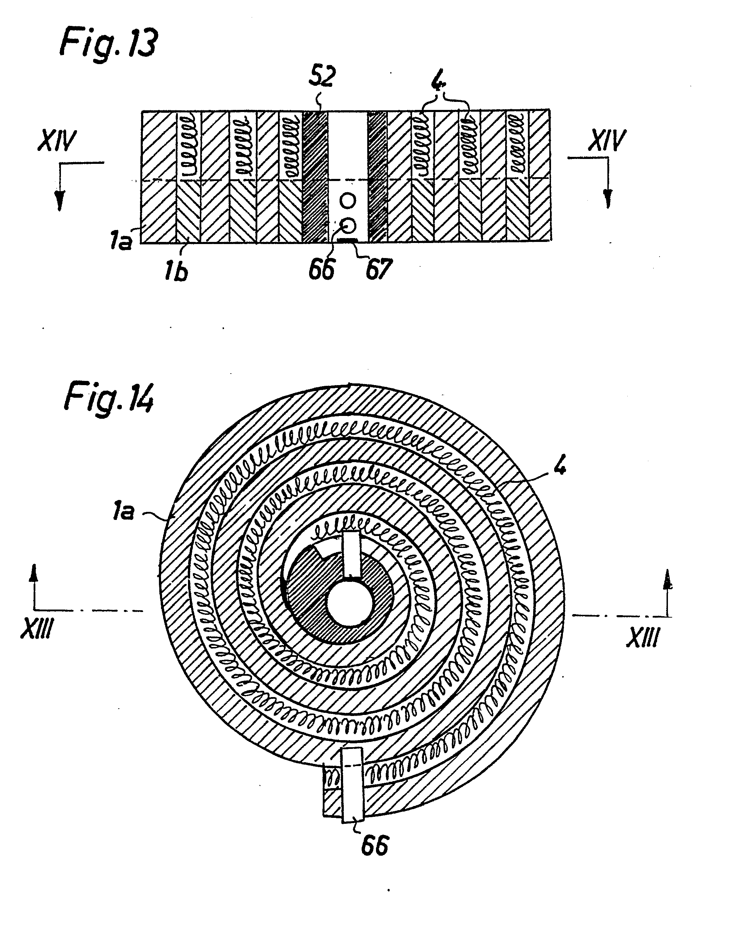

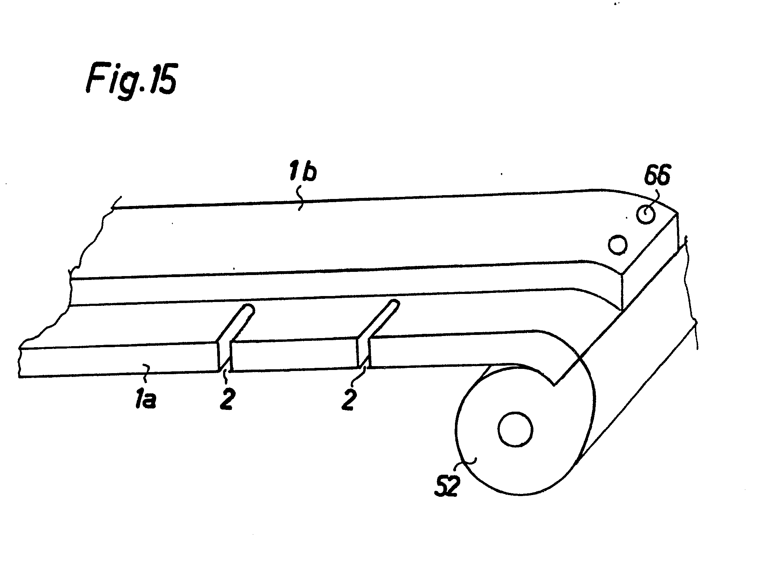

Fig.8 zeigt eine Gesamteinrichtung zur Herstellung aus Bändern gewickelter Kerne im Aufriß und Fig.9 in Draufsicht. Fig.10 stellt ein bearbeitetes Band dar. Die Fig. 11 und 12 betreffen Einzelheiten der Gesamteinrichtung in größerem Maßstab. Die Fig.13 bis 15 zeigen eine Ausführungsvariante eines gewickelten Kernes in einer Seitenansicht, einem Schnitt nach XIV-XIV der Fig. 13 und einer schaubildlichen Ansicht.

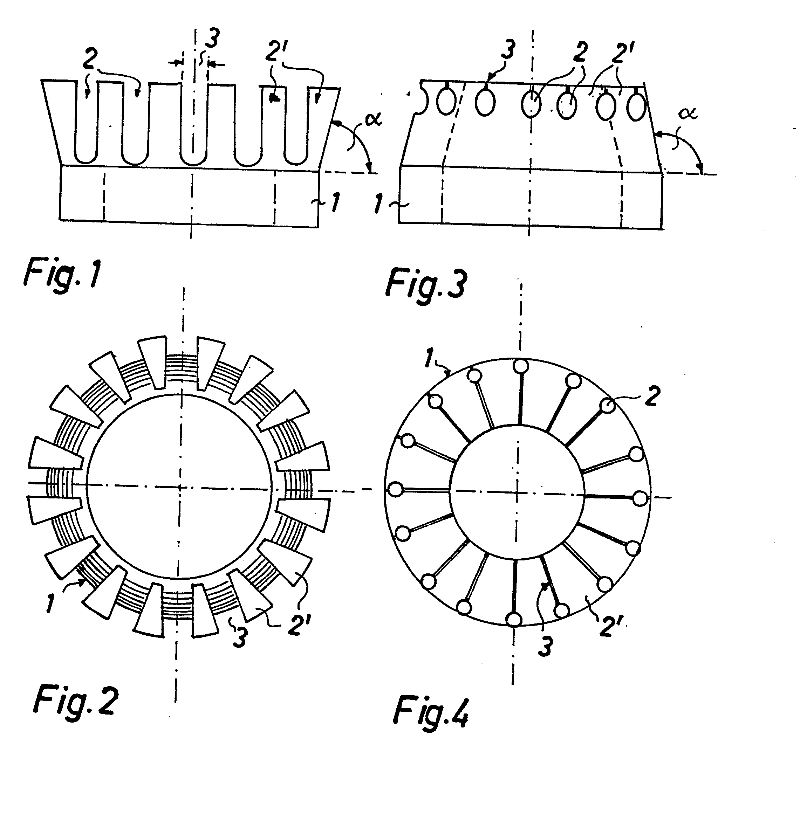

Im einzelnen zeigen Fig. 1 und 2 den Stator-Kern einer Axialfluß-Maschine. Der Kranz dieses Kernes ist von einem Blechband 1 gebildet, das ausgestanzte radiale Ausnehmungen 2 aufweist, die von Stegen 2' begrenzt sind und vorerst nach oben hin offen sind, um ein Maximum an Feldwicklungen aufnehmen zu können.

Fig. 3 und 4 hingegen zeigen einen Rotorkern, bei dem der von den Ausnehmungen 2 durchsetzte Oberteil des Kranzes 1 unter einem wählbaren Winkel $\alpha$ zum Zentrum hin schrägver= laufend abgewinkelt ist und der in diesem geschlossenen Zustand zum späteren Verguß mit einer Gußmasse bereitsteht, die die Ausnehmungen 2 verfüllt. Zwischen den die Ausnehmungen 2 begrenzenden Zungen 2' verbleiben die Spalte 3, deren Breite von der Größe des jeweils gewählten Winkels $\alpha$ abhängig ist. Der Innen- und Außenring des Rotorkernes werden nun gemeinsam mit Scheiben, die eine zentrale Bohrung für die Halterung einer Welle aufweisen, vergossen.

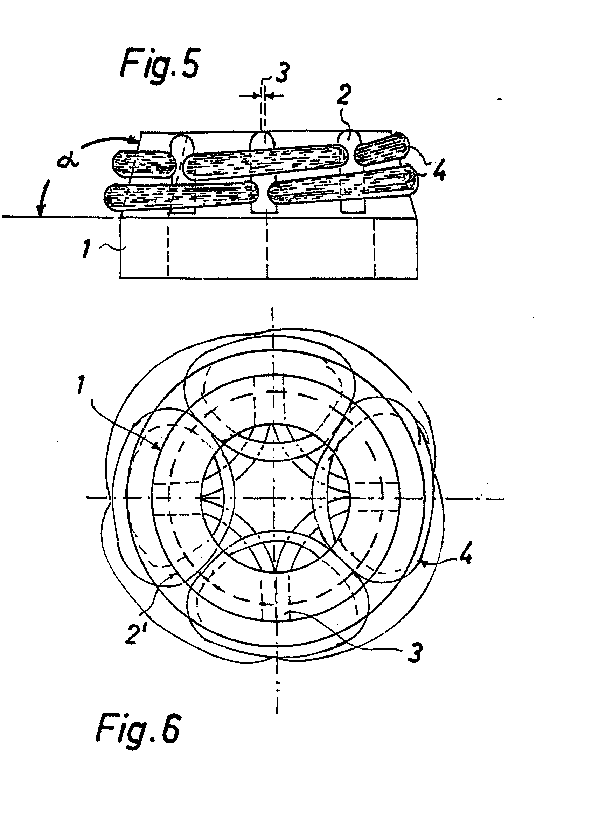

Fig. 5 und 6 zeigen einen solchen Statorkern mit bereits geschlossenem Kranz 1 und darin eingebauten Wicklungen 4.

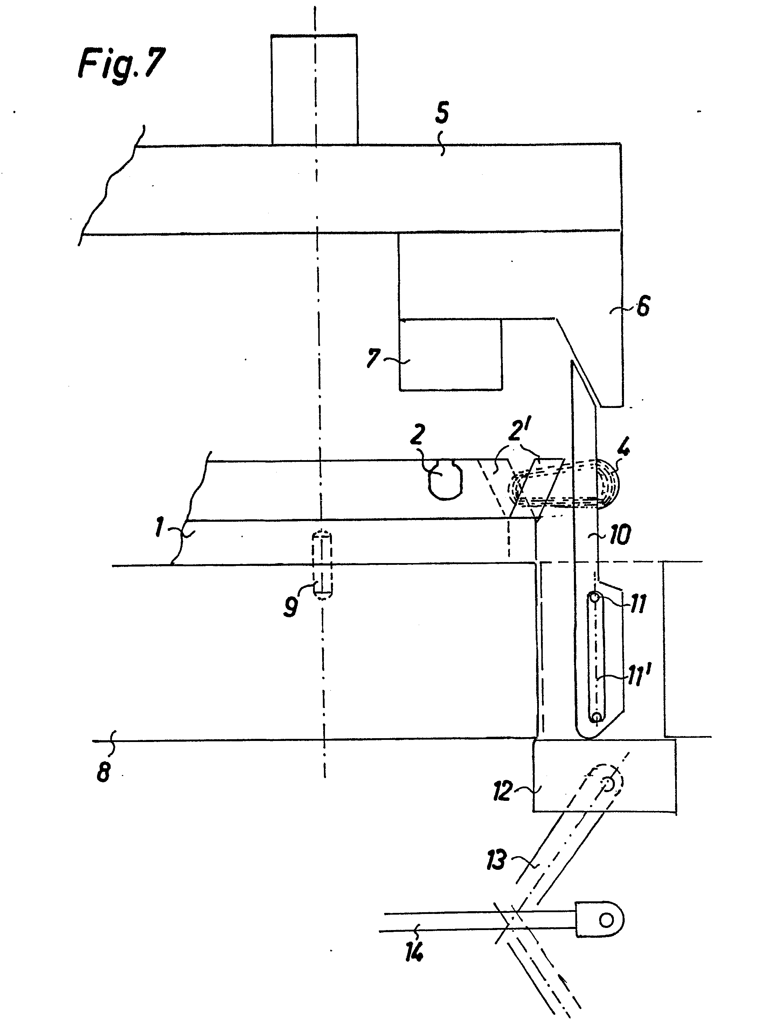

Fig. 7 zeigt in einer schematischen Seitenansicht eine zum Schließen des Kranzes 1 geeignete Vorrichtung. Die Spannplatte 5 einer Presse ist mit einer Kulisse 6 und einer Anschlagplatte 7 gemeinsam in bezug zur Basis 8, auf der der zu bearbeitende Kranz 1 des Statorkernes mit den zunächst noch nach oben hin offenen Ausnehmungen 2 auf= liegt, höhenverstellbar. Positionsbolzen 9 sichern die Soll-Lage des Kernes 1 während der Bearbeitung.

Sobald die Spannplatte 5 abwärts verstellt wird, tritt die Kulisse 6 mit den oberen Enden der zunächst aufrecht= stehenden, um die Schwenkachsen 11 schwenkbar gelagerten Schließfinger 10 in Kontakt und verschwenkt diese Schließ= finger 10 so lange einwärts zwischen die Wicklungen 4 gegen das Zentrum des Kernes 1, bis sich der Anschlag 9 auf die Kernoberseite aufsetzt und die Abwärtsbewegung der Spann= platte 5 beendet. Durch das Einschwenken der Schließfinger 10 werden die zwischen den Ausnehmungen 2 des Kranzes 1 gebildeten Stege 2' einwärts abgewinkelt und begrenzen nunmehr an der Oberseite der Stators Spalte 3, deren Breite von der Größe des Winkels $\alpha$ abhängig ist. Die richtige Wahl der Breite dieser Spalte 3 ist für den Wirkungsgrad und für einen anzustrebenden niedrigen Schlupf der Maschine wichtig.

Mit ihren unteren Enden ruhen die Schließfinger 10 auf einer Stützplatte 12 auf, die über ein Lenkersystem 13 mittels eines Kolbentriebes 14 höhenverstellbar ist. Durch Abwärtsbewegung der Stützplatte 12 treten die Schließfinger 10 wieder aus dem Kranz 1 aus und gelangen mit ihren Längs= führungen 11' an den Schwenkachsen 11 geführt in ihre auf= wärtsweisende Ausgangsstellung.

Die Fig. 8 und 9 zeigen eine Gesamteinrichtung zur Herstellung aus Bändern gewickelter Kerne. Auf dem Rahmen 15 sind zunächst Stanzvorrichtungen 18 und 18' zur Herstellung der Ausnehmungen des Kranzes 1 aufgebaut, die das Band 1 von einer Vorrats= spule 16 übernehmen und durch eine Preßvorrichtung 17 führen. Ein Zählwerk 19 regelt die Tätigkeit der Stanze 18, die die Ausnehmungen 2 des Bandes 1 anfertigt, und bestimmt die Anzahl der jeweils vom Antriebsaggregat 20 über den Motor 20' mittels der Stanze 18 durchgeführten Arbeitsgänge.

Von der Stanze 18 übernimmt ein ortsbeweglicher, in einer horizontalen Ebene schwenkbar gelagerter Tragarm 21 den mit Ausnehmungen 2 versehenen, noch "offenen" Kranz 1 und übergibt ihn an den Übertragungsarm 22 mit dem Zylindertrieb 23 in der ortsbeweglichen Zählstation 21, in der auch die Schutzisolierung der Ausnehmungen 2 eingebracht wird.

In der Station 25 werden die Feldwicklungen 4 eingebracht, die von dem mit Draht 26' versorgten Drahtwickelkopf 26 angefertigt werden.

In der ortsfesten Station 27 werden die Isolatoren 27' eingesetzt und der Kranz wird über die Wartestation 28 nun zu der in der Schließstation 29 angeordneten Presse befördert, wie sie in Fig.7 dargestellt wurde. Der Kranz 1 wird dort - wie bereits erläutert - durch Abbiegen der Zungen 2' geschlossen, ist nun zum Verguß mit einer Vergußmasse bereit und wird hiezu abgenommen. Der bewegliche Tragarm 21 kehrt in der angedeuteten Pfeilrichtung umlaufend zur Zählstation 24 zurück, um mit einem neuen Turnus zu beginnen.

Fig.10 ist eine Draufsicht auf ein flach ausgebreitetes, der Herstellung eines Kernes dienendes Band und zeigt das Programm der Bearbeitung dieses Bandes für die Herstellung eines gewickelten Statorkernes. Am Beginn 30 und am Ende 31 ist der obere Teil des Bandes 1 von der Stanze 18' ausgeschnitten, um dort - wegen der Differenz in der Breite der Zungen 2' - keine Ausnehmungen 2 aufzuweisen. Weil die Zungen 32 am Beginn des Bandwickels mit dem geringeren Durchmesser schmäler und am Ende des Bandwickels mit dem größeren Durch= messer zwangsläufig breiter sein müssen, um radial zu fluchten, würden sich für einen automatischen Start beim Beginn der Herstellung eines neuen Kernes Probleme ergeben.

Zunächst wird am Band 1 eine Nase 34 durch Andrücken des Bandes an einen Bolzen 35 am Wickeldorn 52 (Fig.10) erzeugt. Eine zweite Nase 36 wird von der Stanze 18' exakt an der vorbestimmten Stelle vorgestanzt und im Zuge der ersten Umdrehung des Wickels mit der Nase 34 verpreßt. Zur Her= stellung eines glatten Kernes wird im Band 1 ein Fenster 37 mittels derselben Stanze 18', die für die Nase 36 verwendet wurde, angefertigt, wobei diese Stanze lediglich tiefer in die Matrize eingeführt werden braucht. In diesem Fenster 37 finden die verpreßten Nasen 34 und 36 Platz.

Am Ende 31 des Bandes 1 wird abermals ein Paar von einander zugeordneten Nasen 38 und 39 vorgesehen, um mit ihrer Hilfe den Kernwickel vor dem Verschweißen bzw. Ver= gießen in Form zu halten.

Fig. 11 zeigt die zur Herstellung der Ausnehmungen 2 des Kranzes 1 dienende Stanze 18 und stellt den Eingriff des Bandes 1 für den selbsttätigen Start dar.

Das Band 1 wird durch die Stanze 18 geführt, die orts= fest ist und nur dann einer Einstellung im Schlitz 40 bedarf, wenn fallweise gerade oder winkelige Ausnehmungen 2 ange= fertigt werden sollen. Der Abstreifer 41 für die Stanzabfälle befindet sich an der Front der Matrize. Der Druck auf diese Matrize wird von der Kolbenstange 43 aufgebracht. Die Patrize 44 ist vom Kolbentrieb 45 angetrieben und die Stange 45' von der Hauptwelle.

Das Erfassen des Bandes 1 erfolgt beim Start in der Ebene 47; sobald das Band unter die an einem Lenker 46' lagernde Rolle 46 eintritt, wird es durch den aktivierten Kolbentrieb 48 gekrümmt und am vorstehenden Bolzen 35 des Wickeldornes 52 verankert.

Sobald das Band 1 an diesem Bolzen 35 verankert ist, kehren der Kolbentrieb 48 und die Rolle 46 in ihre Ausgangs= stellung zurück. In der Ebene 50 wird das Aufwickeln des Bandes 1 beendet, der Kernwickel 51 ist fertiggestellt.

Fig.12 ist eine Rückansicht des Zählwerkes 19, das auch dann exakt zählt, wenn die Welle 52, der Wickeldorn, in seine untere Stellung in der Ebene 50 wandert. Die Haupt= welle mit dem Schwungrad 53 rotiert in der Platte 54, die ihrerseits an der Platte 55 angelenkt ist. Diese ist an der beweglichen Platte 56 mittels eines Bolzens angelenkt und ein Exzenterantrieb mit dem Lenker 57, angetrieben von den Treibriemen oder -ketten 58,59 betätigt die Zählplatte 60 und die Zählklinke 61, die mit dem gezahnten Zählrad 62 über eine Feder 63 in Verbindung gesetzt ist. Der Kolben= trieb 64 ist an der Platte 56 befestigt und läßt - im ausge=
fahrenen Zustand - die Rolle 65 an die Klinke 61 anstoßen,
um diese Klinke 61 vom Zählrad 62 zu trennen. Dies ist
für den Start und das Ende der Fertigung der Kernwickel
wichtig.

Gemäß der Fig. 13 bis 15 wird zur Herstellung eines
Statorkernes zumindest ein breiteres Band 1a und zumindest
ein schmäleres Band 1b aneinanderliegend gemeinsam zur
Beginn der Wicklung mittels Bolzen 66 an einem Wickeldorn
52 befestigt. Nach Beendigung der Wicklung können zusätz=
liche Bolzen 66 auch in die Enden dieser Bänder 1a und 1b
eingetrieben werden, bevor die Bänder abgeschnitten werden
oder es können auch andere Methoden, wie Verschweißen,
zur Formhaltung des Wickels Anwendung finden. Die Feld=
wicklungen sind bei dieser Ausführungsform in der Band=
spirale zwischen die vom schmäleren Band 1a frei belassenen
spiraligen Räume des Wickels eingelegt.

Wenn radiale Ausnehmungen 2 als Polschlitze benötigt
werden, können sie nachträglich in den Wickel eingeschnitten
oder vor dem Wickeln in das breitere Band 1a eingestanzt
werden.

Zur Anfertigung magnetischer Rotoren können solche
Kerne auch aus magnetischen Pulver spiralig angefertigt werden.

Zur Formsicherung des Wickels kann man - bei 67 -
den Boden des Wickeldornes 52 mit den Bändern 1a und 1b
verschweißen.

Solche gewickelte Kerne können für einfache oder doppelte
Motoren verwendet werdn.

In großen Fertigungsbetrieben können mehrere spiralig gewickelte Kerne mit Feldwicklungen gleichzeitig gefertigt werden.

Besonders geeignet ist diese Gattung gewickelter Kerne für die Verwendung in Umformern.

0194402

Patentansprüche:
-------------------

1, Elektrische Maschine mit einem Wicklungen tragenden,
   einem Rotor, Stator, Umformer od.dgl. zugehörigen
   Kern, dadurch gekennzeichnet, daß dieser Kern einen
   periphere Ausnehmungen bildenden, die Wicklungen (4)
   aufnehmenden und umschließenden Kranz (1) aufweist.

2. Maschine nach Anspruch 1, dadurch gekennzeichnet, daß
   der Kranz (1) aus einem Band geformt, vorzugsweise
   gewickelt, ist, dessen Ausnehmungen (2) durch Stanzen
   gefertigt sind.

3. Maschine nach Anspruch 1 oder 2, dadurch gekennzeichnet,
   daß der von den Ausnehmungen (2) durchsetzte Oberteil
   des Kranzes (1) unter einem variablen Winkel ($\alpha$)
   zum Zentrum einwärts schräg verlaufend abgewinkelt ist,
   um zwischen den den von den Ausnehmungen (2) begrenzten
   Zungen (2') Spalte (3) zu bilden, deren Breite
   von der Größe des variablen Winkels abhängig ist.

4. Maschine nach einem der Ansprüche 1 bis 3, dadurch gekenn=
   zeichnet, daß der Kern aus einem breiteren und einem
   schmäleren Band (1a bzw. 1b) besteht, die satt aneinander=
   liegend gemeinsam spiralig gewickelt sind, wobei die
   Wicklungen (4) in den vom breiteren Band (1a) umschlossenen,
   jedoch vom schmäleren Band (1b) freibelassenen Bereichen
   des Wickels untergebracht sind (Fig. 13 - 15).

5. Vorrichtung zur Herstellung von Kernen für elektrische Maschinen nach einem der Ansprüche 1 bis 4, gekennzeichnet durch eine Presse mit einer vertikal verstellbaren Spann= platte (5) und mit rings um eine Basis (8) schwenkbar gelagerten Preßfingern (10) zum Verformen der zwischen den Ausnehmungen (2) des Kranzes (1) gebildeten Stege (2') (Fig.7).

6. Vorrichtung nach Anspruch 5, dadurch gekennzeichnet, daß den Preßfingern (10) zu ihrer Verschwenkung eine der Spannplatte (5) zugehörige Kulisse (6) zugeordnet ist (Fig.7).

7. Vorrichtung nach den Ansprüchen 5 und 6, dadurch gekennzeichnet, daß die Preßfinger (10) mit ihren unteren Enden gegen eine höhenverstellbare Stützplatte (12) abge= stützt sind und eine Längsführung (11') für ihre Schwenk= achse aufweisen, um durch Absenken der Stützplatte in ihre Ausgangsstellung zurückzukehren.

8. Vorrichtung zur Herstellung von Kernen für elektrische Maschinen nach einem der Ansprüche 1 bis 7, dadurch gekenn= zeichnet, daß sie eine Vorrichtung zur Zufuhr eines Bandes (1), eine Vorrichtung (18) zum Stanzen von Ausnehmungen (2) in diesem Band (1) und zum Wickeln eines mit radialen Aus= nehmungen versehenen Kranzes aus diesem Band (1), eine Vorrichtung (26) zum Herstellen und Einbringen von Feld= wicklungen (4) in den noch offenen Kranz und eine Vorrichtung nach den Ansprüchen 5 bis 7 zum Einschließen der Feld= wicklungen (4) in diesem Kranz (1) durch dessen Verformung umfaßt (Fig. 8 bis 10).

Fig.1

Fig.3

Fig.2

Fig.4

Fig.5

Fig.6

Fig.7

Fig.8

Fig.9

Fig.10

Fig. 11

Fig.12

0194402

## Fig.13

52     4

XIV                     XIV

1a

1b          66    67

## Fig.14

4

1a

XIII                           XIII

66

**Fig.15**